(19) Europäisches Patentamt
European Patent Office
Office européen des brevets

(11) Publication number: **0 050 453**
**B1**

# (12) EUROPEAN PATENT SPECIFICATION

(45) Date of publication of patent specification: **24.04.85**

(51) Int. Cl.$^4$: **C 08 L 83/04**

(21) Application number: **81304683.6**

(22) Date of filing: **08.10.81**

## (54) An oil-resistant gasket material and packing material.

(30) Priority: **21.10.80 JP 147403/80**

(43) Date of publication of application:
**28.04.82 Bulletin 82/17**

(45) Publication of the grant of the patent:
**24.04.85 Bulletin 85/17**

(84) Designated Contracting States:
**BE DE FR GB IT NL**

(56) References cited:
**BE-A- 880 152**
**DE-A-1 934 356**
**DE-A-2 335 309**
**GB-A-2 029 845**

(73) Proprietor: **Toray Silicone Company Limited**
**2-8 Nihonbashi Muromachi**
**Chuo-ku Tokyo 103 (JP)**

(72) Inventor: **Sumimura, Shin-ichi**
**6, 1-chome Yushudainishi**
**Ichihara-shi Chiba Prefecture (JP)**
Inventor: **Amamiya, Tetsuo**
**5, 1-chome Yushudainishi**
**Ichihara-shi Chiba Prefecture (JP)**

(74) Representative: ***Lewin, John Harvey et al***
**Elkington and Fife High Holborn House 52/54**
**High Holborn**
**London WC1V 6SH (GB)**

**EP 0 050 453 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a room temperature vulcanizable organosiloxane elastomeric composition which is useful as an oil-resistant gasket material and packing material.

Conventional oil-resistant gasket materials and packing materials are in forms made from materials such as cork, asbestos paper, semimetallic material, or cork rubber.

However, these gasket materials and packing materials exhibit drawbacks such as high cost, difficulty in storage management, and lack of applicability to three-face-connecting points.

An adhesive, room-temperature-curable silicone rubber composition which is described in Japanese Patent No. Sho 46[1971]-11,272, published March 22, 1971, to Ichiro Hashishiro and Susumu Horii, has recently been used in the auto industry, especially as gasket material and packing material in car engines; however, this composition is not resistant to hot hydrocarbon oil, with the result that it suffers from oil leaks in long-term usage. For this reason, it is unsatisfactory as a gasket material and packing material.

BE—A—880152 discloses a silicone resin composition comprising an organopolysiloxane containing hydroxyl groups and alkenyl radicals, an alkoxy silane, an aminoalkylalkoxysilane and an organopolysiloxane having alkoxy groups.

The present invention relates to a room temperature vulcanizable organosiloxane elastomeric composition which is useful as an oil-resistant gasket material and packing material, which does not exhibit the conventional drawbacks mentioned above, which is resistant to hot hydrocarbon oil, and which is curable at room temperature.

The present invention relates to a room temperature vulcanizable organosiloxane elastomeric composition comprising a product obtained by mixing (A) 100 parts by weight of a linear polyorganosiloxane, the organic radicals attached to the polysiloxane chain being monovalent radicals selected from monovalent hydrocarbon radicals, halogenated monovalent hydrocarbon radicals, and cyanoalkyl radicals, at least 0.5 percent of the total number of organic radicals being alkenyl radicals on the average, the polyorganosiloxane being terminated by silicon-bonded hydroxyl radicals or silicon-bonded organic moisture-hydrolyzable radicals, and having a viscosity at 25°C of from 0.0001 to 0.1 $m^2/s$, (B) 5 to 300 parts by weight filler, (C) 0.2 to 10 parts by weight of a silane or polysiloxane in which there is present in each molecule at least one aminoalkyl radical bonded to a silicon atom through a silicon-carbon bond and in which there is present in each molecule at least one silicon-bonded alkoxy radical or aminoalkoxy radical, (D) an amount sufficient to make a mixture of (A), (B), and (C) curable at room temperature of a silicon compound having in each molecule at least three silicon-bonded organic moisture-hydrolyzable radicals, and (E) optionally, a catalytic quantity of a curing-acceleration catalyst.

The product obtained by mixing ingredients (A), (B), (C), (D), and (E) is preferably a composition which is storage stable when protected from exposure to moisture, but cures to an elastomer when exposed to moisture. The polyorganosiloxane of (A) is preferably a polydiorganosiloxane terminated with silicon-bonded organic moisture-hydrolyzable radicals.

The linear polyorganosiloxane of component (A) is an essentially linear, that is, linear or slightly branched chain structure and its termination are hydroxyl radicals or organic moisture-hydrolyzable radicals bonded to a silicon atom. Although the number of hydroxyl radicals or hydrolyzable radicals bonded to the same silicon atom is 1, 2 or 3, and at least 2 should be contained in one molecule of the polyorganosiloxane. The hydrolyzable radicals are those conventionally used in room temperature vulcanizable organosiloxane elastomeric compositions and include alkoxy radicals, acyloxy radicals, ketoxime radicals, N-substituted amino radicals, N-substituted amide radicals, and N-substituted aminoxy radicals. However, it is not limited to these radicals.

In (A), at least 0.5% of the organic groups bonded to silicon atoms are alkenyl radicals on the average. When the number of alkenyl radicals is less than 0.5%, the composition is not resistant to hot hydrocarbon oil. The number of alkenyl radicals being 0.5% on the average means that when (A) is a single polymer, 0.5% of the total organic radicals bonded to silicon atoms in each molecule are alkenyl radicals; on the other hand, when (A) is a mixture of polymers, such as a mixture which contains polymers possessing alkenyl radicals bonded to silicon atoms, and polymers which do not possess alkenyl radicals bonded to silicon atoms, 0.5% of the total number of organic radicals bonded to silicon atoms of all polymers in the mixture are alkenyl radicals. Examples of the alkenyl radicals are vinyl radicals, allyl radicals and 2-butenyl radicals. The preferred alkenyl radical is vinyl.

Although the upper limit for the number of alkenyl radicals in (A) is 100%, preparation of such polymers for industrial purposes is not practical and therefore a practical amount of alkenyl radicals is from 0.5 to 50% of the organic radicals. The preferred range of alkenyl radicals is from 0.5 to 25% of the organic radicals.

The organic radicals bonded to silicon atoms in (A) can be monovalent hydrocarbon radicals, halogenated monovalent hydrocarbon radicals, and cyanoalkyl radicals. Examples of organic radicals bonded to silicon atoms, other than alkenyl radicals, are monovalent hydrocarbon radicals such as alkyl radicals such as methyl, ethyl, isopropyl, hexyl, and octadecyl radicals, cycloalkyl radicals such as cyclohexyl and cyclopentyl radicals, alkaryl radicals such as benzyl and β-phenylethyl radicals, aryl radicals such as phenyl, 4-biphenylyl, naphthyl, tolyl, and xylyl radicals; the halogenated derivatives of the monovalent hydrocarbon radicals; and cyanoalkyl radicals such as β-cyanoethyl, γ-cyanopropyl, and β-

cyanobutyl radicals. One molecule can contain one or more different radicals. Preferred organic radicals, other than alkenyl, are methyl, phenyl, and 3,3,3-trifluoropropyl.

The preferred siloxane unit which constitute the principal chain of (A) include dimethylsiloxane, methylvinylsiloxane, methylphenylsiloxane, methyl(3,3,3-trifluoropropyl)siloxane, and diphenylsiloxane.

The viscosity range of (A) at 25°C should be 0.0001 to 0.1 $m^2/s$ on the average. "0.0001 to 0.1 $m^2/s$ on the average" means that (A) can be a polymer with a viscosity in the range of 0.0001 to 0.1 $m^2/s$ or a mixture of polymers which has an average viscosity in the range of 0.0001 to 0.1 $m^2/s$. The viscosity of each polymer can be less than 0.0001 $m^2/s$ or can exceed 0.1 $m^2/s$ as long as the above-mentioned specification is satisfied.

Component (A) preferably has a viscosity in the range from 0.0005 to 0.02 $m^2/s$.

The filler, component (B), can maintain the viscosity and fluidity of the composition of this invention in a range appropriate for a gasket material and a packing material and can also be used to generate mechanical properties in the cured rubber. The filler can be inorganic or organic. However, it is preferably inorganic from the standpoint of oil resistance. A typical inorganic filler is silica filler.

A silica filler can be reinforcing silica filler or non-reinforcing silica filler. Reinforcing silica fillers include fumed silica, precipitated silica, fumed or precipitated silica which has been converted into a hydrophobic material by coating with hexamethyldisilazane or trimethylchlorosilane, silica aerogel, and silica xerogel. Non-reinforcing silica fillers include crushed or pulverized quartz, diatomaceous earth and similar compounds.

Fumed silica is preferred from the standpoint of fluidity and rubber properties after curing, and its specific surface area should be in the range of 130 to 300 $m^2/g$.

Other inorganic fillers include calcium carbonate, magnesium oxide, aluminum hydroxide, iron oxide, zinc oxide, titanium oxide, finely pulverized mica, and carbon black.

The quantity of (B) to be added is 5 to 300 parts by weight and can be varied to achieve desired viscosity and fluidity of the composition and mechanical properties of the cured rubber. The preferred quantity of reinforcing silica filler or carbon black is 5 to 30 parts by weight and the preferred quantity of non-reinforcing silica filler or other fillers is 15 to 200 parts by weight. Component (B) can be a single filler mentioned above or a mixture of two or more of these fillers.

Component (C) is an organosilane or organosiloxane in which one molecule possesses at least one aminoalkyl radical and at least one silicon atom-bonded alkoxyl radical or aminoalkoxy radical. Component (C) exhibits a multiplicative effect with the alkenyl radical of component (A) by increasing the resistance to hot hydrocarbon oil and by increasing the adhesive strength of the cure elastomer to substrates. The alkoxy radicals include methoxy, ethoxy, propoxy, butoxy, and methoxyethoxy, preferrably containing from one to six carbon atoms per radical. The aminoalkoxy radicals include $—OCH_2CH_2NH_2$. Examples of (C) are γ-aminopropyltriethoxysilane of the formula

$$H_2N(CH_2)_3Si(OC_2H_5)_3,$$

γ-aminopropyldimethylethoxysilane of the formula

$$H_2N(CH_2)_3Si(CH_3)_2(OC_2H_5),$$

N-(trimethoxysilylpropyl)ethylenediamine of the formula

$$H_2N(CH_2)_2NH(CH_2)_3Si(OCH_3)_3,$$

N-(dimethoxymethylsilylpropyl)ethylenediamine of the formula

$$H_2N(CH_2)_2NH(CH_2)_3SiCH_3(OCH_3)_2,$$

δ-aminobutyl(methyl)diethoxysilane of the formula

$$H_2N(CH_2)_4Si(CH_3)(OC_2H_5)_2,$$

N,N′-bis(γ-propyltriethoxysilyl)ethylenediamine of the formula

$$(CH_3O)_3Si(CH_2)_3HNCH_2CH_2NH(CH_2)_3Si(OCH_3)_3,$$

γ-aminopropyltri(β-methoxyethoxy)silane of the formula

$$H_2N(CH_2)_3Si(OCH_2CH_2OCH_3)_3,$$

organosilane of the formula

$$H_2NCH_2CH_2O(CH_2)_3Si(OC_2H_5)_3,$$

organosilane of the formula

$$H_2NCH_2CH_2O(CH_2)_3Si(OCH_2CH_2NH_2)_3,$$

organosiloxane of the formula

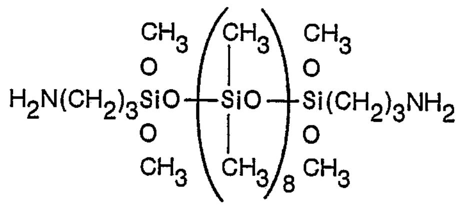 ,

organosiloxane of the formula

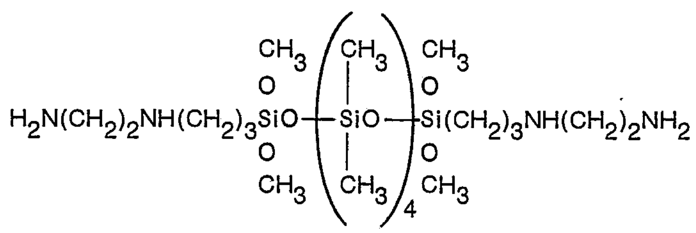 ,

condensation products of partially hydrolyzed γ-aminopropyltrimethoxysilane, and condensation products of partially hydrolyzed organosilane of the formula $H_2NCH_2CH_2O(CH_2)_3Si(OC_2H_5)_3$.

Component (C) is preferably aminoalkyltrialkoxysilanes and N-(trialkoxysilylalkyl)alkylenediamine.

The quantity of (C) is 0.2 to 10 parts by weight. When this quantity is less than 0.2 part by weight, the composition does not exhibit satisfactory oil resistance and adhesive properties. On the other hand, when this quantity exceeds 10 parts by weight, the composition does not exhibit satisfactory heat resistance. The preferred quantity of (C) is from 0.3 to 6 parts by weight.

Component (D) can be a silicon compound which has at least three silicon-bonded organic moisture-hydrolyzable radicals, such as silanes and siloxanes. Examples of these silanes or siloxanes are alkoxysilanes such as tetraethoxysilane, methyltrimethoxysilane, ethyltrimethoxysilane, vinyltrimethoxysilane, 3,3,3-trifluoropropyltrimethoxysilane, β-cyanoethyltrimethoxysilane, tetraisopropoxysilane, tetrabutoxysilane, phenyltrimethoxysilane, octadecyltrimethoxysilane, tetra-(β-chloroethoxy)silane, tetra-(-2,2,2-trifluoroethoxy)silane, propyltris(δ-chlorobutoxy)silane, and methyltris(methoxyethoxy)silane; alkoxysiloxanes such ethylpolysilicate and dimethyltetramethoxydisiloxane; vinyloxysilanes such as methyltri(α-methylvinyloxy)silane, and vinyltri(α-methylvinyloxy)silane; acyloxysilanes such as methyltris(acetoxy)silane, vinyltris(acetoxy)silane, and phenyltris(acetoxy)silane; ketoximesilanes such as methyltris(methylethylketoxime)silane, vinyltris(methylethylketoxime)silane, phenyltris(methylethylketoxime)silane, methyl(diethylketoxime)silane; N-substituted aminosilanes such as methyltris(cyclohexylamino)silane and vinyltris(normal-butylamino)silane; N-substituted amidosilanes such as methyltris(N-methylacetamido)silane, methyltris-(N-butylacetamido)silane, and methyltris(N-cyclohexylacetamido)silane, N-substituted aminoxysilanes such as methyltris(N,N-diethylaminoxy))silane; and N-substituted aminoxysiloxanes such as

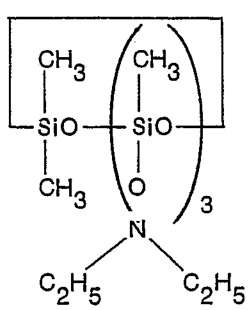

and

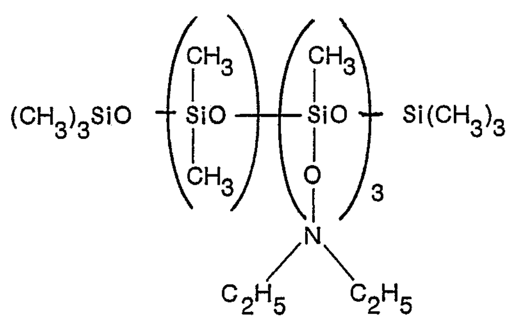

Preferably, (D) is an alkoxysilane, alkoxysiloxane, vinyloxysilane, ketoxime silane, N-substituted aminosilane, an N-substituted aminoxysilane, or N-substituted aminoxysiloxane.

The quantity of (D) can be appropriately determined by considering whether a gasket material or packing material is a one- or two-package type, and whether the terminal silicon atom-bonded radical of (A)

is a hydroxyl radical or a hydrolyzable radical, and by considering the terminal silicon atom-bonded radical concentration of (A). In an extreme case, when the terminal silicon atom-bonded radicals are hydrolyzable radicals whose number is at least 3 in one molecule of (A), the quantity of silane or siloxane, (D), can be 0. If a composition of components (A), (B), and (C) is curable at room temperature in the absence of (D), the phrase "an amount sufficient to make a mixture of (A), (B), and (C) curable at room temperature" specified in the claims can mean 0. The terminal silicon atom-bonded hydrolyzable radical of (A) is desirably identical to the hydrolyzable radical of component (D).

One-package compositions which are stored in containers sealed from moisture and curable at room temperature upon exposure to moisture can be made from (A), (B), and (C) in which (A) has at least three hydrolyzable radicals per molecule. Such one-package compositions can also contain a quantity of (D), such as up to 10 parts by weight or more. One-package compositions can also be made by mixing (A), (B), (C), and (D) wherein (A) is hydroxyl terminated. Here, the quantity of (D) should be sufficient enough to provide at least one mole of (D) molecules for each mole of hydroxyl radical in (A).

Two-package compositions are those wherein (A) containing hydroxyl termination and (B) is packaged in one container and (C) and (D) is packaged in another container. In this situation, the moles of alkoxy, alkoxyalkoxy, and aminoalkoxy plus the moles of hydrolyzable radical in (D) are approximately equivalent to the moles of hydroxyl radical in (A). When the contents of the two packages are mixed, the resulting composition cures at room temperature to an elastomer.

The illustrations of one-package and two-package compositions are to exemplify the nature of the two forms most often found in the silicone rubber art. The practitioner in the silicone rubber art will recognize other variations of one-package and two-package compositions suitable for the presently defined compositions.

Component (E) is a catalyst for accelerating the cure of the composition at room temperature. Component (E) is optional to the extent that some of the variations of the composition do not require a catalyst for curing at room temperature. A catalyst can be used if desired or is required for room temperature cure. The necessity of this catalyst depends on the types of terminal silicon atom-bonded hydrolyzable radicals of component (A) and the hydrolyzable radicals of component (D). This catalyst is not needed for certain types of hydrolyzable radicals but is indispensable for other types of hydrolyzable radicals. If a composition of (A), (B), and (C) or a composition of (A), (B), (C), and (D) is curable at room temperature in the absence of this catalyst, the phrase "a catalytic quantity of a curing acceleration catalyst" specified in the claims can be 0. The type of catalyst used depends on the type of hydrolyzable radical group mentioned above, and it should be appropriately selected. Typical examples of (E) are metal salts of monocarboxylic acids such as dialkyltin diacylates such as dibutyltin diacetate, dibutyltin 2-ethylhexoate, and dibutyltin dilaurate, and other salts such as lead 2-ethyloctoate, butyltin tri-2-ethylhexoate, iron 2-ethylhexoate, cobalt 2-ethylhexoate, manganese 2-ethylhexoate, tin (II) caprilate, tin naphthenate, tin oleate, tin butyrate, zinc naphthenate, zinc stearate, and titanium naphthenate; organic titanates such as tetrabutyl titanate, tetraphenyl titanate, tetra-2-ethylhexyl titanate, tetraoctadecyl titanate, triethanolamine titanate, ethylene glycol titanate, organosiloxytitanium compounds in which an organosiloxy group is bonded to a titanium atom in the form of Si—O—Ti (refer to U.S. Patent No. 3,294,739, issued to Weyenberg), and β-dicarbonyltitanium compounds (refer to U.S. Patent No. 3,334,067, issued to Weyenberg) of the general formula

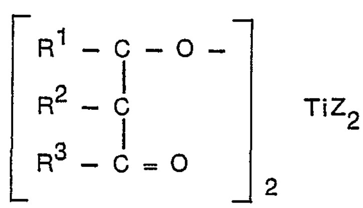

in which $R^1$ is a monovalent hydrocarbon radical having from 1 to 18 inclusive carbon atoms, $R^2$ is a hydrogen atom or a monovalent hydrocarbon radical of 1 to 18 inclusive carbon atoms, $R^3$ is a monovalent hydrocarbon radical or an aliphatic hydrocarbonoxy radical each having from 1 to 18 inclusive carbon atoms, Z is an aliphatic hydrocarbonoxy radical having from 1 to 18 inclusive carbon atoms, an acyloxy radical having from 1 to 18 inclusive carbon atoms, hydroxyl radical, and divalent oxygen atoms forming a TiOTi linkage; and amines such as hexylamine and dodecylamine; amine salts such as hexylamine acetate and dodecylamine phosphate; quaternary ammonium salts such as benzyltrimethylammonium acetate, and alkali metal salts such as potassium acetate. The preferred quantity of (E) is 0.1 to 6 parts by weight relative to 100 parts by weight of component (A) when catalyst is required.

The composition of this invention can be produced simply by blending the above-mentioned components such as (A), (B), and (C) or (A), (B), (C), and (E) or (A), (B), (C), and (D), or (A), (B), (C), (D), and (E). If necessary, hydrophobic treating agents such as diphenylsilane diol and hexamethyldisilazane, for hydrophilic silica filler can be used. Also heat-resistant agents such as cerium oxide, cerium hydroxide, or fumed titanium dioxide; various pigments; flame retardants such as platinum, manganese carbonate, or azoisobutyronitrile; and oil resistance-improving agents such as zinc borate, all of which are traditionally

added to room temperature-curable silicone rubber, can also be added to the composition produced by the method of this invention. Oil-resistant gasket material and packing material produced from the compositions of this invention can be cured at room temperature to become an elastomer which adheres to the substrates during the curing process. Because the elastomer obtained from the composition of this invention are very resistant to hot hydrocarbon oil, they are useful as gasket material and packing material for an auto engine oil-pan, marine diesel engine headcover, auto transmission-pan or rotary engine.

The best room temperature vulcanizable organosiloxane elastomeric compositions comprise a product obtained by mixing (A) 100 parts by weight of a linear hydroxyl endblocked polyorganosiloxane in which the silicon-bonded organic radicals are methyl and vinyl, 0.5 to 25% on the average of the said organic radicals are vinyl, and the viscosity at 25°C is in the range of from 0.0005 to 0.02 $m^2/s$, (B) 5 to 30 parts by weight of a reinforcing silica filler, (C) 0.3 to 6 parts by weight of gamma-aminopropyltrialkoxysilane or N-trialkoxysilylpropylethylenediamine, and (D) an amount of an organotri(ketoxime)silane sufficient to make a mixture of (A), (B), and (C) curable at room temperature upon exposure to moisture and storable in a package which protects the composition from moisture intrusion, and (E) a catalytic quantity of diorganotin diacylate.

This invention will be further explained by using demonstrative examples which should not be construed as limiting the invention which is defined by the claims. In the examples, "parts" means "parts by weight" and the viscosity is the measured value at 25°C.

### Example 1

Mixtures were prepared by blending 100 parts of a hydroxyl endblocked polydiorganosiloxane containing dimethylsiloxane units and methylvinylsiloxane units and having a viscosity of 0.015 $m^2/s$ with 8 parts of phenyltriethoxysilane, 12 parts of fumed silica having a specific surface area of 130 $m^2/g$, one part of gamma-aminopropyltriethoxysilane, and 0.5 part of dibutyltin dilaurate. For each composition in Table I, the amount of methylvinylsiloxane unit is sufficient to provide the vinyl content indicated in Table I as a percentage of the total number of methyl and vinyl radicals in the polydiorganosiloxane. The resulting mixture was defoamed and then packaged in aluminum foil tubes which were sealed to prevent exposure to moisture. This mixture did not undergo and change in quality after storing at room temperature for 6 months. The mixture was then extruded from the aluminum foil tube and cured at room temperature for 2 days to obtain a 2 mm-thick sheet.

This sheet was immersed in lubricating oil #3 shown in JIS K—6301 at 150°C for 3 days. The kinetic viscosity of this oil is in the range of 0.00003196 to 0.00003418 $m^2/s$ at 37.8°C. The change in hardness was measured and the results are reported in Table I.

For comparison, a sheet was manufactured by a method identical to that of Example 1 with the exception that hydroxyl endblocked polydimethylsiloxane, was used in place of the vinyl containing polydiorganosiloxane. These results are also reported in Table I as comparison Example No. 5.

These results demonstrated that the composition of vinyl-containing polysiloxane was very resistant to hot hydrocarbon oil.

### Example 2

Mixtures were prepared by blending 100 parts of a polysiloxane mixture having an average viscosity of 0.005 $m^2/s$ and an average vinyl radical content of 1.1% based on the total number of organic groups in the polysiloxane mixture with 5 parts of fumed silica having a specific surface area of 200 $m^2/g$, 50 parts of diatomaceous earth powder, 8 parts of vinyltris(methylethylketoxime)silane, and the quantity of N-(trimethoxysilylpropyl)ethylenediamine as shown in Table II. The polysiloxane mixture was a blend of 90 parts of a hydroxyl endblocked polydiorganosiloxane containing 90 mol % dimethylsiloxane units and 10 mol % diphenylsiloxane units and having a viscosity of 0.012 $m^2/s$ and 10 parts of a hydroxyl endblocked polydiorganosiloxane containing 90 mol % of dimethylsiloxane units and 10 mol % methylvinylsiloxane units and having a viscosity of 0.00001 $m^2/s$. The resulting mixture was defoamed and cured at room temperature for 7 days to obtain a sheet.

The hardness, tensile strength and elongation at break of the above-mentioned sheet were measured by the methods of JIS K—6301.

To examine the relative resistance to hot hydrocarbon oil, the hardness, tensile strength and elongation at the break of the above-mentioned sheet were measured after the sheet has been immersed in 10W—30 motor oil at 150°C for 14 days. These results are reported in Table II.

The above-mentioned composition was made into a sheet 1 mm thick with a contact area of 25 mm × 25 mm and was inserted between 2 sheets of cold-rolled stainless steel plate (length: 100 mm; width: 25 mm; thickness: 1 mm) and cured at room temperature for 7 days. The tensile shear adhesive strength of the composite was then measured. The tensile shear adhesive strength of the composite which had been immersed in 10W—30 motor oil at 120°C for 10 days was also measured. The results are reported in Table II. Table II demonstrates that N-(trimethoxysilylpropyl)ethylenediamine in combination with vinyl containing polyorganosiloxanes exhibited a significant increase in resistance to hot hydrocarbon oil and in adhesive properties.

Example 3

A mixture was prepared by combining 100 parts of a methyldimethoxysiloxy endblocked polydiorganosiloxane containing dimethylsiloxane units and methylvinylsiloxane and having a viscosity of 0.02 $m^2/s$ with 30 parts of fumed silica having a specific surface area of 200 $m^2/s$ and having been treated with hexamethyldisilazane. The vinyl content of the polydiorganosiloxane is 5% based on the total number of methyl and vinyl radicals in the polydiorganosiloxane. The resulting mixture was heated at 150°C for 2 hours. After the mixture cooled, it was mixed with 1 part of gamma-aminopropyltriethoxysilane, 8 parts of methyltrimethoxysilane and 0.5 part of bis-(acetylacetonyl)diisopropyl titanate.

The above-mentioned composition was stored in a moisture-impermeable container for 3 months without hardening. After 3 months, the composition was extruded from the container and allowed to cure at room temperature for 72 hours. The resistance of this composition to hot hydrocarbon oil was examined by the method identical to that of Example 1. The results are reported in Table III.

For comparison, the experiment was carried out by the method identical to that mentioned above with the exception that methyldimethoxysiloxy endblocked polydimethylsiloxane, replaced the vinyl containing polydiorganosiloxane. The results are also reported in Table III.

Example 4

Silicone rubber sheets were manufactured by the method identical to that of Example 2 with the exceptions that one of the methyltriacetoxysilane, methyltris(normal-butylamino)silane, and methyltris-(N,N-diethylaminoxy)silane was used instead of vinyltris(methylethylketoxime)silane and in the same amount, and 2 parts of organopolysiloxane with the formula of

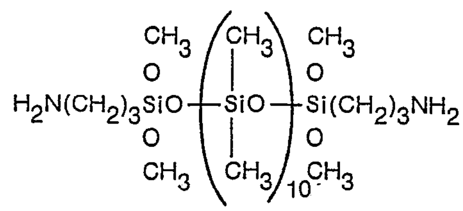

was used instead of N-(trimethoxysilylpropyl)ethylenediamine. Resistance to hot hydrocarbon oil was examined by the method of Example 1. The results showed that the change in hardness was ≤15 in every case, which indicated excellent oil resistance.

TABLE I

| Experiment No. | This Invention 1 | 2 | 3 | 4 | Comparison Example 5 |
|---|---|---|---|---|---|
| Vinyl radical content (%) | 1 | 2 | 5 | 10 | 0 |
| Initial hardness | 27 | 30 | 32 | 35 | 24 |
| Hardness after immersion in JIS #3 oil (150°C/3 days) | 8 | 13 | 19 | 30 | 0 |

TABLE II

| | This Invention | | | Comparison Example | |
|---|---|---|---|---|---|
| Experiment No. | 6 | 7 | 8 | 9 | 10 |
| Quantity of N-(trimethoxysilylpropyl) ethylenediamine (parts) | 0.5 | 1 | 3 | 0 | 0.1 |
| Rubber Properties | | | | | |
| Initial Value | | | | | |
| Hardness | 37 | 34 | 32 | 39 | 38 |
| Tensile Strength (kg/cm$^2$) | 21 | 21 | 20 | 22 | 22 |
| Elongation at break (%) | 340 | 335 | 350 | 320 | 330 |
| After Immersion in Oil | | | | | |
| Hardness | 22 | 21 | 20 | 0 | 6 |
| Tensile Strength (kg/cm$^2$) | 12 | 18 | 15 | 2 | 4 |
| Elongation at break (%) | 550 | 500 | 450 | 80 | 220 |
| Tensile Adhesive Strength (kg/cm$^2$) | | | | | |
| Initial Value | 6.1 | 7.0 | 7.5 | 1.2 | 2.2 |
| After immersion in oil | 4.1 | 6.2 | 6.9 | 0 | 0 |

TABLE III

| | This Invention | Comparison Example |
|---|---|---|
| Experiment No. | 11 | 12 |
| Initial hardness | 38 | 35 |
| Hardness after immersion in JIS #3 lubricating oil (150°C/3 days) | 15 | 0 |

**Claims**

1. A room temperature vulcanizable organosiloxane elastomeric composition comprising a product obtained by mixing
(A) 100 parts by weight of a linear polyorganosiloxane, the organic radicals attached to the polysiloxane chain being monovalent radicals selected from monovalent hydrocarbon radicals, halogenated monovalent hydrocarbon radicals, and cyanoalkyl radicals, at least 0.5 percent of the total number of organic radicals being alkenyl radicals on the average, the polyorganosiloxane being terminated by silicon-bonded, hydroxyl radicals or silicon-bonded organic moisture-hydrolyzable radicals, and having a viscosity at 25°C of from 0.0001 to 0.1 m$^2$/s,
(B) 5 to 300 parts by weight filler,
(C) 0.2 to 10 parts by weight of a silane or polysiloxane in which there is present in each molecule at least one aminoalkyl radical bonded to a silicon atom through a silicon-carbon bond and there is present in each molecule at least one silicon-bonded alkoxy radical or aminoalkoxy radical,
(D) an amount sufficient to make a mixture of (A), (B), and (C) curable at room temperature of a silicon compound having in each molecule at least three silicon-bonded organic moisture-hydrolyzable radicals, and
(E) optionally, a catalytic quantity of a curing-acceleration catalyst.

2. The room temperature vulcanizable organosiloxane elastomeric composition according to claim 1 in which the amount of alkenyl radical is from 0.5 to 25 percent.

3. The use of the room temperature vulcanizable organosiloxane elastomeric composition according to claim 1 as a gasket material.

4. The use of room temperature vulcanizable organosiloxane elastomeric composition according to claim 1 as a packing material.

5. The room temperature vulcanizable organosiloxane elastomeric composition in which the product obtained by mixing ingredients (A), (B), (C), (D), and (E) as defined in claim 1, is a composition which is storage stable when protected from exposure to moisture, but cures to an elastomer when exposed to moisture.

6. The composition according to claim 5 in which the polyorganosiloxane of (A) is a polydiorganosiloxane terminated with silicon-bonded organic moisture-hydrolyzable radicals.

7. The composition according to claim 1 in which the polyorganosiloxane of (A) is a polydiorganosiloxane terminated with hydroxyl radicals, the organic radicals are methyl and vinyl, from 0.5 to 25 percent on the average of the organic radicals are vinyl radicals, and the viscosity at 25°C is a viscosity in the range of 0.0005 to 0.02 $m^2/s$, the filler (B) is a reinforcing silica filler and is present in an amount of from 5 to 30 parts by weight, (C) is gamma-aminopropyltrialkoxysilane or N-(trialkoxysilylpropyl)ethylenediamine and is present in an amount of from 0.3 to 6 parts by weight, the silicon compound of (D) is an organotri-(ketoxime)silane, and the catalyst of (E) is a dialkyltin diacylate.

8. The composition according to claim 1 in which the polyorganosiloxane of (A) is a polydiorganosiloxane terminated with hydroxyl radicals, the organic radicals are methyl and vinyl, from 0.5 to 25 percent on the average of the organic radicals are vinyl radicals, and the viscosity at 25°C is a viscosity in the range of from 0.0005 to 0.02 $m^2/s$; the filler of (B) is a reinforcing silica filler present in an amount of from 5 to 30 parts by weight, (C) is gamma-aminopropyltrialkoxysilane present in an amount of from 0.3 to 6 parts by weight, the silicon compound of (D) is an alkoxysilane present in an amount to provide at least one mole of alkoxysilane molecules per mole of hydroxyl radical in (A), the catalyst of (E) is a dialkyltin diacylate present in an amount of from 0.1 to 6 parts by weight.

9. The composition according to claim 8 in which the gamma-aminopropyltrialkoxysilane is gamma-aminopropyltriethoxysilane, the alkoxysilane of (D) is phenyltriethoxysilane, and the dialkyltin diacylate is dibutyltin dilaurate.

10. The composition according to claim 1 in which the polyorganosiloxane is a polydiorganosiloxane terminated with hydroxyl radicals, the organic radicals are methyl, phenyl, and vinyl, from 0.5 to 25 percent on the average of the organic radicals are vinyl radicals, and the viscosity at 25°C on the average is a viscosity in the range of from 0.0005 to 0.02 $m^2/s$, the filler (B) is a mixture of 5 to 30 parts by weight of reinforcing silica filler and 15 to 200 parts by weight of non-reinforcing silica filler, (C) is N-(trialkoxysilylpropyl)ethylenediamine present in an amount of from 0.3 to 6 parts by weight, and the silicon compound of (D) is a ketoximesilane.

11. The composition according to claim 10 in which the non-reinforcing silica filler is diatomaceous earth, the N-(trialkoxysilylpropyl)ethylenediamine is N-(trimethoxysilylpropyl)ethylenediamine, and the ketoximesilane is vinyltris(methylethylketoxime)silane.

12. The composition according to claim 1 in which the polyorganosiloxane of (A) is a polydiorganosiloxane terminated with methyldimethoxysiloxy units, the organic radicals are methyl and vinyl, from 0.5 to 25 percent on the average of the organic radicals are vinyl radicals, and the viscosity at 25°C on the average is a viscosity in the range of from 0.0005 to 0.02 $m^2/s$, the filler of (B) is a reinforcing silica filler present in an amount of from 5 to 30 parts by weight, (C) is gamma-aminopropyltrialkoxysilane present in an amount of from 0.3 to 6 parts by weight, the silicon compound of (D) is an alkoxysilane, and the catalyst of (E) is an organic titanate present in an amount of from 0.1 to 6 parts by weight.

13. The composition according to claim 12 in which the reinforcing silica filler has surface treatment from hexamethyldisilazane, the gamma-aminopropyltrialkoxysilane is gamma-aminopropyltriethoxysilane, the alkoxysilane is methyltrimethoxysilane, and the organic titanate is bis(acetylacetonyl)-diisopropyltitanate.

14. The composition according to claim 1 in which the polyorganosiloxane is a polydiorganosiloxane terminated with hydroxyl radicals, the organic radicals are methyl, phenyl, and vinyl, from 0.5 to 25 percent on the average of the organic radicals are vinyl radicals, the filler (B) is a mixture of from 5 to 30 parts by weight of reinforcing silica filler and from 15 to 200 parts by weight of diatomaceous earth, (C) is a siloxane of the formula

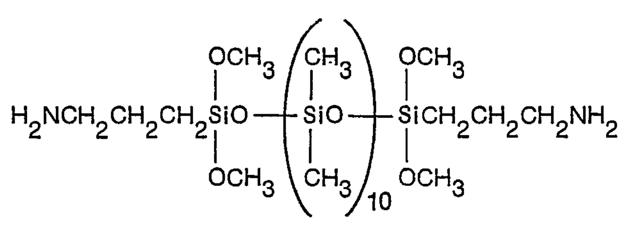

present in an amount of from 0.3 to 6 parts by weight, and the silicon compound of (D) is methyltris-(acetoxy)silane, methyltris(normal-butylamino)silane, or methyltris(N,N-diethylaminoxy)silane.

**Patentansprüche**

1. Eine bei Raumtemperatur vulkanisierbare elastomere Organopolysiloxanzusammensetzung, dadurch gekennzeichnet, daß sie ein Produkt enthält, das erhalten wurde durch Mischen von
(A) 100 Gewichtsteilen eines linearen Polyorganosiloxans, dessen an die Polysiloxankette gebundene organische Reste einwertige Reste sind, ausgewählt aus einwertigen Kohlenwasserstoffresten, halogenierten einwertigen Kohlenwasserstoffresten und Cyanalkylresten, wobei im Mittel mindestens 0.5 Prozent der gesamten Anzahl der organischen Reste Alkenylreste sind, das Polyorganosiloxan durch an Silicium gebundene Hydroxylreste oder an Silicium gebundene organische durch Feuchtigkeit hydrolysierbare Reste beendigt ist und eine Viskosität bei 25°C von 0.0001 bis 0.1 $m^2/s$ hat,
(B) 5 bis 300 Gewichtsteilen Füller,
(C) 0.2 bis 10 Gewichtsteilen eines Silans oder Polysiloxans, bei dem in jedem Molekül mindestens ein an ein Siliciumatom über eine Silicium-Kohlenstoffbindung gebundener Aminoalkylrest vorhanden ist und in jedem Molekül mindestens ein an Silicium gebundener Alkoxyrest oder Aminoalkoxyrest vorhanden ist,
(D) einer ausreichenden Menge einer Siliciumverbindung, die in jedem Molekül mindestens drei an Silicium gebundene organische, durch Feuchtigkeit hydrolysierbare Reste besitzt, um eine Mischung von (A), (B) und (C) bei Raumtemperatur härtbar zu machen und
(E) gegebenenfalls eine katalytische Menge eines die Härtung beschleunigenden Katalysators.

2. Die bei Raumtemperatur vulkanisierbare elastomere Organosiloxanzusammensetzung nach Anspruch 1, dadurch gekennzeichnet, daß die Menge des Alkenylrestes 0.5 bis 25 Prozent beträgt.

3. Die Verwendung der bei Raumtemperatur vulkanisierbaren elastomeren Organosiloxanzusammensetzung nach Anspruch 1 als Dichtungsmaterial.

4. Die Verwendung der bei Raumtemperatur vulkanisierbaren elastomeren Organosiloxanzusammensetzung nach Anspruch 1 als Verpackungsmaterial.

5. Die bei Raumtemperatur vulkanisierbare elastomere Organosiloxanzusammensetzung, dadurch gekennzeichnet, daß das Produkt, das durch Mischen der Bestandteile (A), (B), (C), (D) und (E), wie in Anspruch 1 definiert wurde, eine Zusammensetzung ist, die lagerbeständig ist, wenn sie gegen die Einwirkung von Feuchtigkeit geschützt ist, aber zu einem Elastomeren aushärtet, wenn sie Feuchtigkeit ausgesetzt ist.

6. Die Zusammensetzung nach Anspruch 5, dadurch gekennzeichnet, daß das Polyorganosiloxan (A) ein Polydiorganosiloxan mit endständigen an Silicium gebundenen organischen, durch Feuchtigkeit hydrolysierbaren Resten ist.

7. Die Zusammensetzung nach Anspruch 1, dadurch gekennzeichnet, daß das Polyorganosiloxan (A) ein Polydiorganosiloxan mit endständigen Hydroxylgruppen ist, die organischen Reste Methyl und Vinyl sind, 0.5 bis 25 Prozent im Mittel der organischen Reste Vinylreste sind und die Viskosität bei 25°C eine Viskosität im Bereich von 0.0005 bis 0.02 $m^2/s$ ist, der Füller (B) ein verstärkender Kieselsäurefüller ist und in einer Menge von 5 bis 30 Gewichtsteilen anwesend ist, (C) gamma-Aminopropyltrialkoxysilan oder N-(Trialkoxysilylpropyl)ethylendiamin ist und in einer Menge von 0.3 bis 6 Gewichtsteilen anwesend ist, die Siliciumverbindung (D) ein Organotri(ketoxim)silan ist und der Katalysator (E) ein Dialkylzinndiacylat ist.

8. Die Zusammensetzung nach Anspruch 1, dadurch gekennzeichnet, daß das Polyorganosiloxan (A) ein Polydiorganosiloxan mit endständigen Hydroxylresten ist, die organischen Reste Methyl und Vinyl sind, 0.5 bis 25 Prozent im Mittel der organischen Reste Vinylreste sind und die Viskosität bei 25°C eine Viskosität im Bereich von 0.0005 bis 0.02 $m^2/s$ ist, der Füller (B) ein verstärkender Kieselsäurefüller in einer Menge von 5 bis 30 Gewichtsteilen ist, (C) gamma-Aminopropyltrialkoxysilan in einer Menge von 0.3 bis 6 Gewichtsteilen ist, die Siliciumverbindung (D) ein Alkoxysilan in einer Menge ist, um mindestens ein Mol Alkoxysilanmoleküle pro ein Mol Hydroxylrest in (A) bereitzustellen, der Katalysator (E) ein Dialkylzinndiacylat in einer Menge von 0.1 bis 6 Gewichtsteilen ist.

9. Die Zusammensetzung nach Anspruch 8, dadurch gekennzeichnet, daß das gamma-Aminopropyltrialkoxysilan gamma-Aminopropyltriethoxysilan ist, das Alkoxysilan (D) Phenyltriethoxysilan ist und das Dialkylzinndiacylat Dibutylzinndilaurat ist.

10. Die Zusammensetzung nach Anspruch 1, dadurch gekennzeichnet, daß das Polyorganosiloxan ein Polydiorganosiloxan mit endständigen Hydroxylresten ist, die organischen Reste Methyl, Phenyl und Vinyl sind, 0.5 bis 25 Prozent im Mittel der organischen Reste Vinylreste sind und die Viskosität bei 25°C im Mittel eine Viskosität im Bereich von 0.0005 bis 0.02 $m^2/s$ ist, der Füller (B) eine Mischung von 5 bis 30 Gewichtsteilen eines verstärkenden Kieselsäurefüllers und 15 bis 200 Gewichtsteilen eines nicht-verstärkenden Kieselsäurefüllers ist, (C) N-(Trialkoxysilylpropyl)ethylendiamin in einer Menge von 0.3 bis 6 Gewichtsteilen ist und die Siliciumverbindung (D) Ketoxim-silan ist.

11. Die Zusammensetzung nach Anspruch 10, dadurch gekennzeichnet, daß der nicht-verstärkende Kieselsäurefüller Diatomeenerde ist, das N-(Trialkoxysilylpropyl)ethylendiamin N-(Trimethoxysilylpropyl)-ethylendiamin ist und das Ketoxim-silan Vinyltris(methylethylketoxim)silan ist.

12. Die Zusammensetzung nach Anspruch 1, dadurch gekennzeichnet, daß das Polyorganosiloxan (A) Polydiorganosiloxan mit endständigen Methyldimethoxysiloxy-Einheiten ist, die organischen Reste Methyl und Vinyl sind, 0.5 bis 25 Prozent im Mittel der organischen Reste Vinylreste sind und die Viskosität bei 25°C im Mittel eine Viskosität im Bereich von 0.0005 bis 0.02 $m^2/s$ ist, der Füller (B) ein verstärkender Kieselsäurefüller in einer Menge von 5 bis 30 Gewichtsteilen ist, (C) gamma-Aminopropyltrialkoxysilan in einer Menge

von 0.3 bis 6 Gewichtsteilen ist, die Siliciumverbindung (D) ein Alkoxysilan ist und der Katalysator (E) ein organisches Titanat in einer Menge von 0.1 bis 6 Gewichtsteilen ist.

13. Die Zusammensetzung nach Anspruch 12, dadurch gekennzeichnet, daß der verstärkende Kieselsäurefüller eine Oberflächen behandlung erhalten hat mit Hexamethyldisilazan, das gamma-Aminopropyltrialkoxysilan gamma-Aminopropyltriethoxysilan ist, das Alkoxysilan Methyltrimethoxysilan ist und das organische Titanat Bis-(Acetylacetonyl)diisopropyltitanat ist.

14. Die Zusammensetzung nach Anspruch 1, dadurch gekennzeichnet, daß das Polyorganosiloxan ein Polydiorganosiloxan mit endständigen Hydroxylresten ist, die organischen Reste Methyl, Phenyl und Vinyl sind, 0.5 bis 25 Prozent im Mittel der organischen Reste Vinylreste sind, der Füller (B) eine Mischung von 5 bis 30 Gewichtsteilen eines verstärkenden Kieselsäurefüllers und 15 bis 200 Gewichtsteilen Diatomeenerde ist, (C) ein Siloxan der Formel

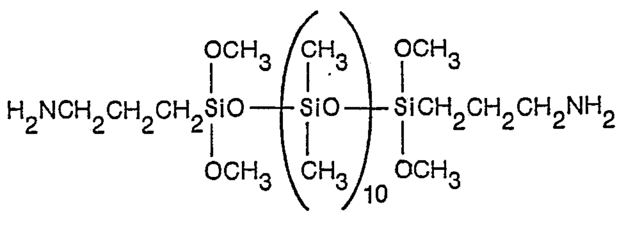

in einer Menge von 0.3 bis 6 Gewichtsteilen ist und die Siliciumverbindung (D) Methyltriacetoxysilan, Methyltris(normal-butylamino)silan oder Methyltris(N-diethylaminoxy)silan ist.

**Revendications**

1. Une composition élastomère d'organosiloxane, vulcanisable à la température ambiante, qui comprend un produit obtenu en mélangeant:
(A) 100 parties en poids d'un polyorganosiloxane linéaire, les radicaux organiques attachés à la chaîne du polysiloxane étant des radicaux monovalents choisis parmi les radicaux hydrocarbonés monovalents, les radicaux hydrocarbonés monovalents halogénés et les radicaux cyanoalcoyles, au moins 0,5% du nombre total des radicaux organiques étant des radicaux alcényles en moyenne, le polyorganosiloxane étant terminé par des radicaux hydroxyle liés au silicium ou des radicaux organiques, liés au silicium, hydrolysables par l'humidité, et ayant une viscosité à 25°C de 0,0001 à 0,1 $m^2/s$,
(B) 5 à 300 parties en poids de charge,
(C) 0,2 à 10 parties en poids d'un silane ou polysiloxane dans lequel il y a, dans chaque molécule, au moins un radical aminoalcoyle lié à atome de silicium par une liaison silicium-carbone et dans lequel il y a, dans chaque molécule, au moins un radical alcoxy ou aminoalcoxy lié au silicium,
(D) une quantité suffisante pour faire un mélange de (A), (B) et (C) durcissable à la température ambiante, d'un composé du silicium ayant dans chaque molécule au moins trois radicaux organiques, liés au silicium, hydrolysables par l'humidité, et
(E) facultativement, une quantité catalytique d'un catalyseur accélérant la vulcanisation.

2. La composition élastomère d'organosiloxane vulcanisable à la température ambiante selon la revendication 1, dans laquelle la quantité de radicaux alcényles va de 0,5 à 25%.

3. L'utilisation de la composition élastomère d'organosiloxane vulcanisable à la température ambiante selon la revendication 1, en tant que matière pour joints.

4. L'utilisation de la composition élastomère d'organosiloxane vulcanisable à la température ambiante selon la revendication 1, en tant que matière de garnissage.

5. La composition élastomère d'organosiloxane vulcanisable à la température ambiante, dans laquelle le produit obtenu par mélange de ingrédients (A), (B), (C), (D) et (E) tels que définis dans la revendication 1, est une composition qui est stable au stockage lorsqu'elle est protégée de l'exposition à de l'humidité, mais durçit en un élastomère lorsqu'elle est exposée à de l'humidité.

6. La composition selon la revendication 5, dans laquelle le polyorganosiloxane de (A) est un polydiorganosiloxane terminé par des radicaux organiques, liés au silicium, hydrolysables par l'humidité.

7. La composition selon la revendication 1, dans laquelle le polyorganosiloxane de (A) est un polydiorganosiloxane terminé par des radicaux hydroxyle, les radicaux organiques sont des radicaux méthyl et vinyle, de 0,5 à 25% en moyenne des radicaux organiques étant des radicaux vinyle, et la viscosité à 25°C est comprise dans la gamme de 0,0005 à 0,02 $m^2/s$, la charge (B) est une charge formée de silice renforçante et est présente à raison de 5 à 30 parties en poids, (C) est un gamma-aminopropyltrialcoxysilane ou une N-(trialcoxysilylpropyl)-éthylènediamine et est présent à raison de 0,3 à 6 parties en poids, le composé du silicium de (D) est un organotri(cétoxime)silane, et le catalyseur de (E) est un diacylate de dialcoyl-étain.

8. La composition selon la revendication 1, dans laquelle le polyorganosiloxane de (A) est un polydiorganosiloxane terminé par des radicaux hydroxyle, les radicaux organiques sont des radicaux méthyle et vinyle, de 0,5 à 25% en moyenne des radicaux organiques étant des radicaux vinyle, et la viscosité à 25°C est comprise dans la gamme de 0,0005 à 0,02 $m^2/s$, la charge de (B) est une charge formée de silice renforçante présente à raison de 5 à 30 parties en poids, (C) est un gamma-aminopropyltrialcoxysilane présent à raison de 0,3 à 6 parties en poids, de composé du silicium de (D) est un alcoxysilane présent en une quantité fournissant au moins une mole de molécules d'alcoxysilane par radical hydroxyle dans (A), le catalyseur de (E) est un diacylate de dialcoyl-étain présent à raison de 0,1 à 6 parties en poids.

9. La composition selon la revendication 8, dans laquelle le gamma-aminopropyltrialcoxysilane est le gamma-aminopropyltriéthoxysilane, l'alcoxysilane de (D) est le phényltriéthoxysilane, et le diacylate de dialcoyl-étain est le dilaurate de dibutyl-étain.

10. La composition selon la revendication 1, dans laquelle le polyorganosiloxane est un polydiorganosiloxane terminé par des radicaux hydroxyle, les radicaux organiques sont des radicaux méthyle, phényle et vinyle, de 0,5 à 25% en moyenne des radicaux organiques étant des radicaux vinyle, et la viscosité à 25°C est comprise dans la gamme de 0,0005 à 0,02 $m^2/s$, la charge (B) est un mélange de 5 à 30 parties en poids de silice renforçante et de 15 à 200 parties en poids de silice non-renforçante, (C) est une N-(trialcoxysilylpropyl)éthylènediamine présente à raison de 0,3 à 6 parties en poids, et le composé due silicium de (D) est un cétoximesilane.

11. La composition selon la revendication 10, dans laquelle la charge silice non-reforçante est de la terre de diatomées, la N-(trialcoxysilylpropyl)éthylènediamine est la N-(triméthoxysilylpropyl)éthylènediamine, et le cétoximesilane est le vinyltris(methyléthylcétoxime)silane.

12. La composition selon la revendication 1, dans laquelle le polyorganosiloxane de (A) est un polydiorganosiloxane terminé par des unités méthyldiméthoxysiloxy, les radicaux organiques sont des radicaux méthyle et vinyle, de 0,5 à 25% en moyenne des radicaux organiques étant des radicaux vinyle, et la viscosité à 25°C est comprise dans la gamme de 0,0005 à 0,02 $m^2/s$, la charge de (B) est une charge formée de silice renforçante présente à raison de 5 à 30 parties en poids, (C) est un gamma-aminopropyltrialcoxysilane présent à raison de 0,3 à 6 parties en poids, le composé du silicium de (D) est un alcoxysilane, et le catalyseur de (E) est un titanate organique présent à raison de 0,1 à 6 parties en poids.

13. La composition selon la revendication 12, dans laquelle la charge silice renforçante a été traitée en surface par de l'hexaméthyldisilazane, le gamma-aminopropyltrialcoxysilane est le gamma-aminopropyltriéthoxysilane, l'alcoxysilane est le méthyltriméthoxysilane, et le titanate organique est le bis-(acétylacétonyl)diisopropyltitante.

14. La composition selon la revendication 1, dans laquelle le polyorganosiloxane de (A) est un polydiorganosilaxane terminé lar des radicaux hydroxyle, les radicaux organiques sont des radicaux méthyle, phényle, et vinyle, de 0,5 à 25% en moyenne des radicaux organiques étant des radicaux vinyle, la charge de (B) est un mélangede 5 à 30 parties en poids de silice renforçante et de 15 à 200 parties en poids de terre de diatomées, (C) est un siloxane de la formule

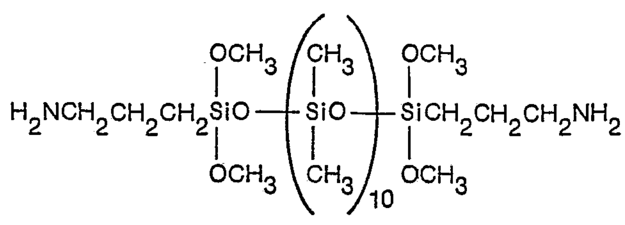

présente à raison de 0,3 à 6 parties en poids, et le composé du silicium de (D) est du méthyltriacétoxysilane, du méthyltris(n-butylamino)silane, ou du méthyltris(N-diéthylaminoxy)silane.